# EUROPÄISCHE PATENTSCHRIFT

(11) **EP 1 294 549 B1**
(45) Veröffentlichungstag und Bekanntmachung des Hinweises auf die Patenterteilung: **25.08.2004**
(21) Anmeldenummer: 01984053.7
(22) Anmeldetag: 28.06.2001
(51) Int. Cl.: B29B 13/02

(54) **VORRICHTUNG ZUM ERWÄRMEN VON SCHMELZFÄHIGEM MATERIAL**
DEVICE FOR HEATING A MELTABLE MATERIAL
DISPOSITIF POUR CHAUFFER UNE MATIERE FUSIBLE

(30) Priorität: 28.06.2000 DE 10031447
(43) Veröffentlichungstag der Anmeldung: 26.03.2003
(73) Patentinhaber: Hengst GmbH & Co. KG, 48147 Münster (DE)
(72) Erfinder: BOEHNKE, Christian, 48159 Münster (DE)
(74) Vertreter: Habbel, Hans-Georg, Dipl.-Ing.
(86) Internationale Anmeldenummer: PCT/DE2001/002335
(87) Internationale Veröffentlichungsnummer: WO 2002/000407

(56) Entgegenhaltungen:
- DE-A- 1 955 598
- US-A- 3 218 430
- US-A- 3 413 441
- PATENT ABSTRACTS OF JAPAN vol. 009, no. 322 (M-440), 18. Dezember 1985 (1985-12-18) & JP 60 157813 A (MATSUSHITA DENKI SANGYO KK), 19. August 1985 (1985-08-19)

## Beschreibung

Die Erfindung betrifft eine Vorrichtung nach dem Oberbegriff des Anspruches 1.

Aus sowohl der Metall verarbeitenden als auch der Kunststoff verarbeitenden Industrie ist es bekannt, Aufschmelz-, Warmhalte- oder Fördereinrichtungen zu beheizen, indem Heizelemente den jeweiligen Gehäusen anliegend angeordnet sind. Diese Beheizungsart ist grundsätzlich vorteilhaft, da die Wärmeübertragung durch direkte Kontaktierung, also durch Wärmeleitung, sehr effizient ist.

In der Praxis treten jedoch häufig Probleme dadurch auf, daß je nach den thermischen Ausdehnungsverhältnissen Spalte zwischen den Heizelementen und den jeweiligen Gehäusen entstehen können, wodurch die Wärmeleitfähigkeit von den Heizelementen auf die Gehäuse erheblich beeinträchtigt wird. Zudem können je nach dem erreichten Temperaturniveau Oxidationserscheinungen am Gehäuse oder an der Oberfläche der Heizelemente auftreten, wobei derartige Oxidschichten die Wärmeleitfähigkeit ebenfalls erheblich beeinträchtigen können.

Abgesehen davon, daß aufgrund der geschilderten Nachteile der Wirkungsgrad der Heizung verschlechtert werden kann, wird die Steuerbarkeit der Heizleistung, also die Möglichkeit, im zu beheizenden Material eine gewünschte Temperatur einzustellen, durch die vorgenannten Nachteile ebenfalls beeinträchtigt, so daß ggf. die gesamte Prozeßführung und damit die Ergebnisse einer nachgeschalteten Anlage verschlechtert werden kann.

Aus der US - A - 4,600,375 sowie der JP - A - 601 578 13 ist es bekannt, eine gattungsgemäße Aufschmelz-, und Fördereinrichtung mittels Wärmestrahlung zu beheizen. Dabei wird Harz in einem Glasrohr aufgeschmolzen. Da das Glasrohr für die Wärmestrahlung transparent, also durchlässig ist, wirkt die Wärmestrahlung direkt auf das zu erwärmende Harz ein. Für die Verarbeitung von Metallen ist diese gattungsgemäße Vorrichtung nicht geeignet.

Der Erfindung liegt die Aufgabe zugrunde, eine gattungsgemäße Vorrichtung dahingehend zu verbessern, daß diese auch zum Aufschmelzen von Metall verwendbar ist.

Diese Aufgabe wird durch eine Vorrichtung mit den Merkmalen des Anspruches 1 gelöst.

Die Erfindung schlägt mit anderen Worten vor, auch bei Verwendung einer Strahlungsquelle als Heizeinrichtung das aufzuschmelzende Material nicht direkt, mittels durch den Förderkanal hindurchgehender Strahlung zu beheizen, sondern indirekt. Hierzu absorbiert der Förderkanal die Strahlung, so dass eine Erwärmung des Materials durch die Wärmeabgabe vom Förderkanal zum Material erfolgt.

Die Strahlungsabsorption bewirkt eine Vergleichmäßigung des Wärmeeintrags in das Metall, denn auf das Metall auftreffende Strahlung, wie bei einer unmittelbaren Strahlungsbeheizung, kann möglicherweise zu einem unerwünscht hohen Anteil reflektiert werden, was den Wirkungsgrad des Heizvorgangs beeinträchtigen würde. Zudem kann der Förderkanal problemlos aus einem Material bzw. Werkstoff bestehen, welcher im Gegensatz zu Glas auch bei höheren Temperaturen nicht mit dem Metall bzw. der Metallschmelze reagiert und verschleißt.

Die Beheizung des Förderkanals erfolgt ihrerseits über Strahlungsenergie, welche durch Vermeidung der eingangs genannten Nachteile wie Spalten- oder Schichtenbildung vorteilhaft ist. Dabei kann beispielsweise eine Strahlung mit infraroter Wellenlänge oder mit einer dem Infrarot nahe benachbarten Wellenlänge Verwendung finden. Die trägheitslose weil masselose Wärmeübertragung in der Form einer Wärmestrahlung ermöglicht zudem eine schnelle und präzise Beeinflussung der Temperatur. Die Heizelemente können z. B. als Heizdraht, als Entladungslampe oder anderweitig, an die jeweiligen Betriebsbedingungen angepasst, geeignet ausgebildet sein

Da der Förderkanal strahlungsabsorbierend ist, erwärmt er sich und beheizt auf diese Weise das zu fördernde und zu beheizende Gut. Ebenfalls kann das Material des Förderkanals so gewählt sein, daß sowohl eine teilweise Strahlungsdurchlässigkeit als auch eine teilweise Strahlungsabsorption erreicht wird, beispielsweise um auf diese Weise ein Material von besonders hoher mechanischer Beanspruchbarkeit verwenden zu können.

Die Heizung ist "außerhalb" des Förderkanales angeordnet, wobei hiermit eine Trennung zwischen der Heizung einerseits und dem zu fördernden und zu beheizenden Gut andererseits gemeint ist. Beispielsweise bei einer kreisförmigen Geometrie der Vorrichtung muß dies jedoch nicht notwendigerweise die Anordnung radial außen von dem Förderkanal bedeuten.

Vorteilhaft kann der Förderkanal als Rohr ausgestaltet sein, das zu fördernde Material also ringsum umgeben, so daß das Material von unerwünschten äußeren Einflüssen weitgehend abgeschirmt ist. Die Strahlungsheizung kann vorteilhaft rings um ein solches Rohr angeordnet sein, um allseitig auf den Förderkanal einzuwirken und so eine intensive, allseitige und gleichmäßige Erwärmung des zu erwärmenden Materials zu ermöglichen. Gegenüber einer ebenfalls denkbaren Geometrie des Förderkanals mit einem Ringquerschnitt, bei dem die Heizung im Inneren dieses Ringquerschnittes angeordnet ist, ergibt sich bei einer radial von außen einwirkenden Heizung eine größere Oberfläche, auf welche die Heizstrahlen einwirken können, so daß die Übertragung großer Heizleistungen begünstigt wird. Ggf. kann sowohl innerhalb als auch außerhalb dieses Ringquerschnittes die Heizung angeordnet sein, um eine besonders starke Energieeinstrahlung zu ermöglichen.

Vorteilhaft kann eine Trennwand zwischen der Heizung und dem Förderkanal vorgesehen sein, die für die Wärmestrahlung durchlässig ist, also die Beheizung des Förderkanales nahezu ungehindert ermöglicht, die aber eine Konvektion verhindert, also die Wärmeübertragung durch Bewegungen von Luft oder Gas. Auf diese Weise kann eine möglichst kühl gehaltene Zone geschaffen werden, in der die Heizkörper, also die Strahlungsquellen, angeordnet sind, so daß deren Überhitzung zuverlässig vermieden werden kann. Gleichzeitig kann durch die Trennwand die Wärmeintensität im Bereich des Förderkanales auf einem möglichst hohen Niveau beibehalten werden.

Ein anderer Anwendungszweck der Trennwand kann darin bestehen, im Bereich des Förderkanales oder im Bereich der Strahlungsquellen eine bestimmte Atmosphäre einzustellen, die für die mechanische bzw. thermische Beständigkeit des Förderkanales bzw. der Strahlungsquellen besonders vorteilhaft ist, so daß diese jeweiligen Bauteile mit einer besonders hohen Lebensdauer betrieben werden können.

Um das Temperaturniveau im Bereich des Förderkanales möglichst hoch zu halten und damit Wärmeverluste zu vermeiden, kann die Trennwand vorteilhaft einseitig strahlungsdurchlässig und in einer anderen Richtung reflektierend sein, angepaßt an die jeweiligen Wellenlängen, mit der die Strahlung einerseits von den Heizquellen kommt und andererseits vom Förderkanal bzw. vom zu beheizenden Material zurückgestrahlt wird. So kann die Strahlung zunächst möglichst ungehindert die Trennwand passieren und wird anschließend als Rückstrahlung möglichst vollständig von der Trennwand zurückgehalten und in den Bereich des Förderkanales bzw. des Materials reflektiert.

Vorteilhaft kann die Heizung ring- oder wendelförmig um den Förderkanal verlaufen. Gegenüber anderen, beispielsweise mäanderrförmigen Verläufen ergibt sich so eine möglichst gleichmäßige Strahlungsverteilung und damit eine gleichmäßige Temperaturverteilung.

Vorteilhaft kann die Heizung abschnittsweise unterschiedlich beheizt werden, um über die Länge des Förderkanales den Heizbedarf anzupassen, beispielsweise um zunächst Aufschmelzzonen und anschließend Warmhaltezonen für bereits aufgeschmolzenes Material innerhalb des Förderkanales zu ermöglichen.

Vorteilhaft kann der Förderkanal insgesamt in einem geschlossenen Gehäuse angeordnet sein. Auf diese Weise kann innerhalb dieses Gehäuses eine Atmosphäre eingestellt werden, beispielsweise durch Evakuierung des Gehäuses durch Inertgas od. dgl., die eine optimale Beständigkeit des Förderkanales sicherstellt, wobei unter Beständigkeit hier insbesondere auch die Oberflächenausgestaltung des Förderkanales verstanden ist, so daß deren, die Strahlungswärme optimal aufnehmende Eigenschaften möglichst zuverlässig und über eine lange Lebensdauer des Förderkanales beibehalten werden können. Dieses Gehäuse kann bei Verwendung eines entsprechend geeigneten Materials gleichzeitig auch die Funktionen der vorerwähnten Trennwand aufweisen.

Die Trennwand bzw. das erwähnte Gehäuse können vorteilhaft aus Quarzglas hergestellt sein, da dies für viele Anwendungsfälle eine vorteilhaft gute Temperaturbeständigkeit und gleichzeitig eine vorteilhaft gute Durchlässigkeit für die Wärmestrahlung bietet. Um die gewünschten Reflexionseigenschaften aufzuweisen, kann ein derartiges Quarzglas oberflächenbehandelt, beispielsweise beschichtet sein.

Vorteilhaft können Reflektoren vorgesehen sein, welche die Wärmestrahlung der Heizquellen auf den Förderkanal lenken, so daß hierdurch Wärmeverluste minimiert werden und die auf den Förderkanal einwirkende Heizintensität verbessert wird.

Zwei Ausführungsbeispiele der Erfindung werden anhand der Zeichnung im folgenden näher erläutert. Dabei zeigt
- Fig. 1: ein erstes Ausführungsbeispiel, und
- Fig. 2: ein zweites Ausführungsbeispiel einer Vorrichtung zum Erwärmen von schmelzfähigem Material.

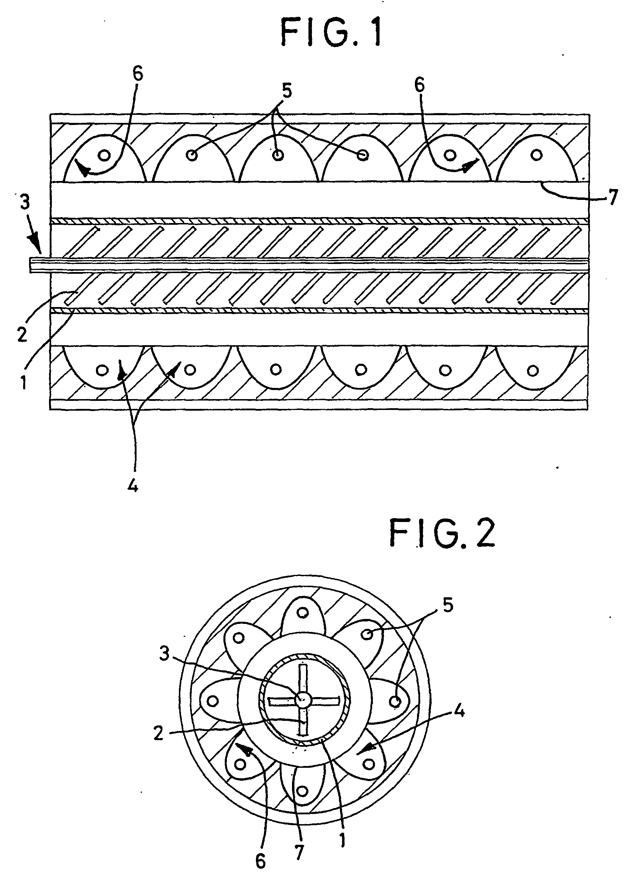

In Fig. 1 ist mit 1 ein Förderkanal bezeichnet, der rohrförmig ausgestaltet ist und in welchem sich Fördermittel 2 befinden, die lediglich schematisch angedeutet sind und durch eine angetriebene Welle 3 in Drehung versetzt werden können, um auf diese Weise Material, welches im Förderkanal 1 befindlich ist, durch den Förderkanal 1 zu fördern.

Der Förderkanal 1 kann je nach dem zu förderndem Material und je nach dem Temperaturniveau, welches erzielt werden soll, aus den verschiedensten Werkstoffen bestehen, z. B. aus keramischen, mineralischen oder metallischen Werkstoffen oder Mischungen daraus. Er wird beheizt durch eine Heizung 4, wobei die Heizung 4 Heizelemente 5 aufweist, die ringförmig oder wendelförmig um den Förderkanal 1 herum angeordnet sind und Wärmestrahlung auf den Förderkanal 1 richten. Reflektoren 6 lenken die rückwärts gerichteten Strahlungsanteile nach vorn, also zum Förderkanal 1, um auf diese Weise Strahlungsverluste zu verringern.

Der Förderkanal 1 ist in einem Gehäuse 7 angeordnet, welches gleichzeitig eine Trennwand zwischen dem Förderkanal 1 und der Heizung 4 darstellt. Wie der Förderkanal 1 ist das Gehäuse 7 ebenfalls rohrförmig ausgestaltet. Es besteht aus Quarzglas. Das Quarzglas ist derart beschichtet, daß Wärmestrahlung von den Heizelementen 5 nahezu ungehindert durch das Gehäuse 7 auf den Förderkanal 1 gelangen kann, daß vom Förderkanal 1 abgestrahlte Wärme jedoch durch das Gehäuse 7 nach innen wieder zum Förderkanal 1 reflektiert wird.

Innerhalb des Gehäuses 7 ist eine Inertgasatmosphäre vorgesehen, so daß bei einem metallischen Förderkanal 1 auch die Erhitzung auf hohe Temperaturen nicht zu einer Oxidation der Oberfläche des Förderkanales 1 führt und dementsprechend zu Verfärbungen oder Oxidschichten, die die Wärmeaufnahmefähigkeit des Förderkanales 1 verschlechtern könnten.

Zudem stellt das Gehäuse 7 eine thermische Barriere dar, so daß innerhalb des Gehäuses 7 ein hohes Temperaturniveau um den Förderkanal 1 herum beibehalten werden kann, während außerhalb des Gehäuses 7 ein niedriges Temperaturniveau herrscht, ggf. kann der Bereich außerhalb des Gehäuses 7 sogar gekühlt werden, um eine Überhitzung der Heizelemente 5 zu vermeiden.

Das lediglich schematisch angedeutete Gehäuse 7 kann doppelwandig ausgestaltet sein, wobei zwischen den beiden Wandungen ein Vakuum vorgesehen sein kann, um die thermische Isolierwirkung des Gehäuses 7 zu verbessern.

Die Heizelemente 5 der Heizung 4 können abschnittsweise oder gruppenweise unterschiedlich ansteuerbar sein, so daß über die Länge des Förderkanales 1 unterschiedliche Temperaturzonen eingestellt werden können oder zur Beibehaltung einer konstanten Temperatur die Strahlungsintensitäten der einzelnen Heizelemente 5 entsprechend dem jeweiligen Wärmebedarf unterschiedlich eingestellt werden können.

Demgegenüber zeigt Fig. 2 ein Ausführungsbeispiel in Form eines Querschnittes durch eine Vorrichtung, die ähnlich der in Fig. 1 dargestellten ist. Der Querschnitt zeigt jedoch, daß die Heizelemente 5 sich nicht radial oder zumindest im wesentlichen radial um das Gehäuse 7 erstrecken, wie dies bei dem Ausführungsbeispiel von Fig. 1 der Fall ist, sondern vielmehr in Längsrichtung oder zumindest im wesentlichen in Längsrichtung zum Förderkanal 1 erstrecken. Diese Ausführungsform nach Fig. 2 kann ggf. eine besonders einfache Herstellung der gesamten Vorrichtung begünstigen. Die Heizelemente 5 können in Längsrichtung hintereinander aus mehreren einzeln beheizbaren Abschnitten bestehen, so daß die bereits erwähnte, abschnittsweise individuell einstellbare Intensität der Wärmeeinwirkung auf den Förderkanal 2 auch bei diesem Ausführungsbeispiel ermöglicht ist.

An Stelle länglicher Heizelemente, wie in den Fig. 1 ringförmig gebogen und in Fig. 2 stabförmig dargestellt, können auch flächige Heizelemente vorgesehen sein, oder punktförmige, z. B. etwa glühbirnenähnliche Heizelemente. In Anpassung an die Form der Heizelemente sind vorteilhaft die Reflektoren gestaltet, z. B. etwa rinnenförmig und länglich; oder etwa rinnenförmig und ringartig; oder etwa schalenförmig die punktuellen Heizelemente umgebend.

## Patentansprüche

1. Vorrichtung zum Erwärmen von schmelzfähigem Material, wie Kunststoff,
vor einer Weiterverarbeitungsanlage, wie in einer Gießoder Extrusionsanlage,
mit einem Förderkanal (1) für das Material
und mit einer außerhalb des Förderkanals (1) angeordneten Heizung (4),
wobei die Heizung (4) als Strahlungsheizung ausgestaltet ist,
und wobei die Strahlung auf den Förderkanal (1) gerichtet ist,
**dadurch gekennzeichnet,**
**dass** der Förderkanal (1) aus einem Werkstoff besteht, welches die Strahlung zum indirekten Aufschmelzen des Materials absorbiert,
derart, dass das Aufschmelzen des Materials durch die Wärmeabgabe vom Förderkanal (1) zum Material erfolgt.

2. Vorrichtung nach Anspruch 1, **dadurch gekennzeichnet, dass** der Förderkanal (1) als Rohr ausgestaltet ist und die Strahlung von radial außen auf das Rohr gerichtet ist.

3. Vorrichtung nach Anspruch 1 oder 2, **dadurch gekennzeichnet, dass** die Heizung (4) vom Förderkanal (1) beabstandet ist und zwischen dem Förderkanal (1) und der Heizung (4) eine strahlungsdurchlässige Trennwand angeordnet ist.

4. Vorrichtung nach Anspruch 3, **dadurch gekennzeichnet**, die Trennwand als thermische Barriere ausgestaltet ist, derart, dass die Temperatur auf der Seite der Trennwand, wo die Heizung (4) angeordnet ist, geringer ist als auf der Seite der Trennwand, wo der Förderkanal (1) angeordnet ist.

5. Vorrichtung nach Anspruch 3, **dadurch gekennzeichnet dass** die Trennwand für die von der Heizung (4) auftreffende Strahlung stark durchlässig ist und / oder für die vom
Förderkanal (1) reflektierte Strahlung stark reflektierend ist.

6. Vorrichtung nach einem der vorhergehenden Ansprüche, **dadurch gekennzeichnet, dass** die Heizung (4) ring- oder wendelförmig um den Förderkanal (1) verläuft.

7. Vorrichtung nach einem der vorhergehenden Ansprüche, **dadurch gekennzeichnet, dass** die Heizung (4) zwei oder mehrere, separat in ihrer Heizleistung beeinflußbare Abschnitte aufweist.

8. Vorrichtung nach einem der vorhergehenden Ansprüche, **dadurch gekennzeichnet, dass** der Förderkanal (1) in einem Gehäuse (7) angeordnet ist, in dem eine die Beständigkeit des Förderkanals (1) unterstützende Atmosphäre herrscht, wie mittels Vakuum oder Inertgas.

9. Vorrichtung nach Anspruch 3 oder 8, **dadurch gekennzeichnet, dass** die Trennwand oder das Gehäuse (7) aus Quarzglas besteht.

10. Vorrichtung nach einem der vorhergehenden Ansprüche, **gekennzeichnet durch** Reflektoren (6), welche die Strahlen der Heizung (4) auf den Förderkanal (1) lenkend angeordnet sind.

## Claims

1. Device for heating a meltable material such as plastic before a processing machine such as in a foundry or extruding plant, with a conveying duct (1) for the material and a heating system (4) located outside the conveying duct (1), where the heating system (4) is designed as a radiation heater, and where the radiation is directed at the conveying duct (1),
**characterised in that**
the conveying duct (1) consists of a material which absorbs the radiation for indirect melting of the material,
in such a way that the melting of the material takes place through the transmission of heat from the conveying duct (1) to the material.

2. Device according to claim 1, **characterised in that** the conveying duct (1) is designed as a tube and the radiation is directed radially at the tube from the outside.

3. Device according to claim 1 or 2 **characterised in that** the heating system (4) is at a distance (1) from the conveying duct, and that a partition wall, through which the radiation can pass, is located between the conveying duct (1) and the heating system (4).

4. Device according to claim 3 **characterised in that** the partition wall is designed as a thermal barrier in such a way that the temperature on the side of the partition wall on which the heating system (4) is located, is lower than on the side of the partition wall where the conveying duct (1) is located.

5. Device according to claim 3 **characterised in that** the partition wall is easily permeable for the radiation striking it from the heating system (4) and / or which strongly reflects the radiation reflected by the conveying duct (1).

6. Device according to one of the above claims **characterised in that** the heating system (4) takes the form of a ring or spiral around the conveying duct (1).

7. Device according to one of the above claims **characterised in that** the heating system (4) has two or several sections whose heating capacity can be controlled separately.

8. Device according to one of the above claims **characterised in that** the conveying duct (1) is located in a housing (7), where there is an atmosphere which enhances the stability of the conveying duct (1), by means of, for example, a vacuum or an inert gas.

9. Device according to claim 3 or 8, **characterised in that** the partition wall or housing (7) consist of silica glass.

10. Device according to one of the above claims **characterised by** reflectors (6) which are arranged to direct the radiation from the heating system (4) at the conveying duct (1).

## Revendications

1. Dispositif pour chauffer une matière fusible telle que du plastique avant une installation de transformation telle qu'une installation de coulée ou d'extrusion, avec un canal de transport (1) pour la matière et un chauffage (4) disposé à l'extérieur du canal de transport (1), dans lequel le chauffage (4) est conçu comme un chauffage à rayonnement, et dans lequel le rayonnement est dirigé vers le canal de transport (1), **caractérisé en ce que** le canal de transport (1) est fait d'un matériau qui absorbe le rayonnement pour faire fondre indirectement la matière, de telle sorte que la fusion de la matière résulte du transfert de chaleur du canal de transport (1) vers la matière.

2. Dispositif selon la revendication 1, **caractérisé en ce que** le canal de transport (1) est conçu comme un tube et que le rayonnement est dirigé vers le tube dans le sens radial depuis l'extérieur.

3. Dispositif selon la revendication 1 ou 2, **caractérisé en ce que** le chauffage (4) est écarté du canal de transport (1) et une cloison laissant passer le rayonnement est disposée entre le canal de transport (1) et le chauffage (4).

4. Dispositif selon la revendication 3, **caractérisé en ce que** la cloison est conçue comme une barrière thermique, de telle sorte que la température du côté de la cloison où se trouve le chauffage (4) soit plus basse que du côté de la cloison où se trouve le canal de transport (1).

5. Dispositif selon la revendication 3, **caractérisé en ce que** la cloison est fortement perméable au rayonnement provenant du chauffage (4) et/ou réfléchit fortement le rayonnement renvoyé par le canal de transport (1).

6. Dispositif selon l'une des revendications précédentes, **caractérisé en ce que** le chauffage (4) entoure le canal de transport (1) sous une forme annulaire ou hélicoïdale.

7. Dispositif selon l'une des revendications précédentes, **caractérisé en ce que** le chauffage (4) présente deux ou plusieurs sections dont la puissance de chauffe peut être réglée séparément.

8. Dispositif selon l'une des revendications précédentes, **caractérisé en ce que** le canal de transport (1) est disposé dans un boîtier (7) dans lequel règne une atmosphère favorisant la résistance du canal de transport (1), telle qu'un vide ou un gaz inerte.

9. Dispositif selon la revendication 3 ou 8, **caractérisé en ce que** la cloison ou le boîtier (7) est en verre quartzeux.

10. Dispositif selon l'une des revendications précédentes, **caractérisé en ce qu'**il comporte des réflecteurs (6) disposés de façon à diriger le rayonnement du chauffage (4) vers le canal de transport (1).
